# EUROPÄISCHE PATENTSCHRIFT

(11) **EP 1 013 979 B1**
(45) Veröffentlichungstag und Bekanntmachung des Hinweises auf die Patenterteilung: **26.11.2003**
(21) Anmeldenummer: 99122642.4
(22) Anmeldetag: 13.11.1999
(51) Int. Cl.: F16L 11/04, F16L 31/02, F16L 33/00

(54) **Schlauch, z.B. ein Ladeluftschlauch**
Hose, for example for supply of air
Tuyau flexible,par exemple pour la suralimentation en air

(30) Priorität: 22.12.1998 DE 19859374; 20.02.1999 DE 19905325
(43) Veröffentlichungstag der Anmeldung: 28.06.2000
(73) Patentinhaber: Mündener Gummiwerk GmbH, 34346 Hann. Münden (DE)
(72) Erfinder: Möller, Thilo, D-34446 Hann. Münden (DE); Dannenberg, Wolfgang, D-34346 Hann. Münden (DE); Grebe, Thomas, D-34393 Grebenstein (DE); Röder, Günter, D-34346 Hann. Münden (DE)
(74) Vertreter: WALTHER, WALTHER & HINZ Patentanwälte

(56) Entgegenhaltungen:
- DE-C- 963 101
- DE-C- 19 749 332
- FR-A- 2 178 487
- FR-A- 2 371 289

## Beschreibung

Die vorliegende Erfindung betrifft einen Schlauch, z. B. einen Ladeluftschlauch, mit einem mindestens eine Gewebeeinlage umfassenden Druckträger, wobei der Druckträger von einem vulkanisierbaren Material umgeben ist, und wobei der Schlauch endseitig eine umlaufende Nut besitzt.

Gegenstand der Erfindung ist ebenfalls ein Verfahren zur Herstellung eines derartigen Schlauches.

Ladeluftschläuche sind bekannt; Ladeluftschläuche werden z. B: bei Motoren mit Turboladern verwandt, um die Luft zum Ansaugemodul des Motors zu leiten. Die transportierte Luft weist erhebliche Temperaturen auf, was zum einen in der Temperatur des Turboladers selbst begründet ist und zum anderen in der Druckerhöhung der Ladeluft durch den Turbolader. So sind insbesondere Ladeluftschläuche (EP 826 915) bekannt, die aus einem AEM (Acrylat-Ethylen-Monomer) bestehen. Allerdings sind derartige aus AEM hergestellte Schläuche nur bis zu etwa 160°C temperaturdauerfest. Gerade bei extrem hochgezüchteten Motoren müssen die Schläuche zum Teil Temperaturen von wesentlich mehr als 220°C und auch hohen Drücken standhalten. Solchen Temperaturen und Drücken sind aus AEM hergestellte Ladeluftschläuche nicht gewachsen.

Aus der DE 44 22 557 ergibt sich die Lehre, auf das Ende eines Schlauchrohlings, der innenseitig einen entsprechenden Dorn zur Formgebung aufweist, außenseitig eine Formhülse aufzusetzen, um Schlauchkrümmer mit einem genau maßhaltigen, glattflächigen Anschlussende mit vergleichsweise geringem Kostenaufwand herzustellen.

Aus dem Stand der Technik gemäß der DE 197 49 332 C1 ist bekannt, nutartige Einprägungen für Schlauchschellen durch Aufsetzen eines entsprechenden Werkzeuges aus einem Elastomermaterial während der Vulkanisation eines Schlauches aus einem Elastomer, z. B. AEM, zu erzeugen. Nachteilig hierbei ist jedoch die geringe Temperaturbeständigkeit eines solchen Schlauches, wie dies bereits ausgeführt wurde.

Der Erfindung liegt daher die Aufgabe zugrunde, einen Schlauch der eingangs genannten Art bereitzustellen, der druck- und hochtemperaturfest ist, einfach herstellbar ist, und der einen einfachen Einbau bei der Motormontage erlaubt.

Die Aufgabe wird erfindungsgemäß durch einem Schlauch nach Anspruch 1 gelöst.

Durch die Verwendung von silikonhaltigem Material wird eine Temperaturfestigkeit von bis zu 250 ° C erreicht. Es ist bekannt, dass zur Befestigung der Ladeluftschläuche auf Rohrenden Schlauchschellen an den entsprechenden Stellen angeordnet werden. Wesentlich ist nun, dass derartige Schlauchschellen an einem vorbestimmten Ort auf dem Schlauch und auf dem Rohrende aufsitzen müssen, um eine optimale Verbindung zwischen Schlauch und Rohr herstellen zu können. Es ist nun - wie bereits zum Stand der Technik ausgeführt - bekannt, Einprägungen in Form von umlaufenden Nuten durch ein Werkzeug auf einem Elastomerschlauch anzubringen, wobei in den Nuten die Schlauchschellen einsitzen. Es hat sich allerdings herausgestellt, dass dieses Werkzeug in Form eines aus einem Elastomer bestehenden, gummielastischen Rings zur Einprägung einer derartigen umlaufenden Nut auf einem Silikonkautschukschlauch, nur schwerlich nach der Vulkanisation wieder vom Silikonschlauch gelöst werden kann, da es sich mit dem Silikon des Schlauches bei dem Vernetzungsvorgang des Silikonkautschuks durch die Vulkanisation verbunden hat. Darüber hinaus steht insbesondere bei Verwendung zweier Lagen aus einem textilen Gewebe als Druckträgerschicht nur noch eine sehr geringe Menge an Silikonkautschukmaterial zur Einprägung einer derartigen Nut in den Schlauch zur Verfügung. Das heißt, es besteht immer die Gefahr, dass die äußerste Gewebelage durch die Prägung sichtbar wird, was sich negativ auf die Haltbarkeit und Dichtigkeit auswirkt. Durch die Verwendung einer Muffe aus einem Silikongummi, die quasi nach Fertigstellung des Rohlings aus Silikonkautschuk auf den Rohling aufgestülpt wird, werden derartige Probleme vermieden. Wird nämlich eine vorgeformte Muffe aus Silikongummi anstelle des Werkzeuges aus Elastomer verwendet, dann stellt sich der oben beschriebene Nachteil des Festhaftens auf dem Silikonkautschuk-Schlauchrohling als Vorteil insofern dar, als die Muffe auf dem Rohling bzw. auf dem Schlauch durch "Verkleben" fest aufsitzt, und insofern auch dort verbleiben kann. Dies funktioniert selbst dann, wenn die Muffe aus fertig vernetztem Silikonkautschuk, also Silikongummi besteht, weil die Muffe aus Silikongummi noch genügend Vernetzungspunkte zur Herstellung einer chemischen Verbindung mit dem Silikonkautschuk des Schlauchrohlings bei der nachfolgenden Vulkanisation aufweist. Die Verwendung einer Muffe aus Silikongummi, also vernetztem Silikonkautschuk, hat den Vorteil, dass diese sich in ihren Abmessungen bei der Vulkanisation nicht mehr ändert.

Durch die Verwendung eines Gewebes anstelle eines Gestrickes, kann auch eine Druckfestigkeit erreicht werden, die wesentlich über der liegt, die mit den bislang bekannten Schläuchen erzielbar ist. Dies rührt insbesondere auch daher, dass bei einem Druckträger aus Gewebe eine höhere Fadendichte verwirklicht werden kann, als dies bei einem Gestrick der Fall ist.

Zur weiteren Erhöhung der Druckfestigkeit ist vorgesehen, dass die Gewebelage Aramid-Fäden aufweist.

Vorteilhaft besitzt ein derartiger Schlauch eine hautartige Sperrschicht, insbesondere aus Fluorkautschuk oder Fluorkunststoff, um den Schlauch diffusionsdicht zu gestalten.

Die Verwendung einer fertigen Muffe hat noch einen weiteren Vorteil, der darin besteht, dass Kennzeichnungen wie zum Beispiel Artikelnummern, Materialangaben, Fertigungsdatum oder auch Montagemarkierungen nicht erst nachträglich - beispielsweise im Siebdruckverfahren - auf den Schlauch aufgebracht werden müssen, sondern unmittelbar bei der Vorvulkanisation der Muffe in dieselbige bereits eingebracht werden können, die dann wiederum auf den Schlauchrohling aufgeschoben wird.

Gegenstand der Erfindung ist ebenfalls ein Verfahren zur Herstellung eines Schlauches nach Anspruch 7.

Aus der DE 96 31 01 ist bekannt, einen sogenannten Schichtkörper um einen Metalldorn zu wickeln, der gegebenenfalls mit Seifenstein bestäubt werden kann, wobei die ungehärtete Silikonkautschuk-Schicht am Dorn anliegt. Das hierbei erhaltene Rohr oder der Schlauch wird dann vulkanisiert bzw. gehärtet. Aus dieser Literaturstelle ist allerdings nicht bekannt, den Rohling, gegebenenfalls nach einer Vorvulkanisation, von dem ersten Dorn zu entfernen, diesen Rohling auf einen der Kontur des Schlauches entsprechenden zweiten Dorn zu schieben, endseitig auf den Rohling jeweils eine vorgefertigte Muffe aus Elastomermaterial aufzubringen, den Rohling auf dem zweiten Dorn zu bandagieren und daraufhin zu vulkanisieren. Durch die Bandagierung wird erreicht, dass die Muffe eine innige Verbindung mit dem Schlauchrohling während der Vulkanisation erhält. Nach der Vulkanisation wird die Bandage abgenommen und der Schlauch kann seinem bestimmungsgemäßen Gebrauch zugeführt werden.

Vorteilhaft besteht die fertige Muffe aus Silikongummi, hingegen der Rohling aus Silikonkautschuk. Während der Vulkanisation findet dann die Vernetzung des Kautschuks zu Silikongummi statt, wobei die Muffe aus Silikongummi noch genügend Vernetzungspunkte für eine chemische Verbindung mit dem Silikonkautschuk des Schlauchrohlings aufweist. Gefördert wird die Verbindung zwischen der Muffe und dem Schlauchrohling durch das Bandagieren des Schlauchrohlings mit der Muffe insgesamt.

Durch die Verwendung eines plattenförmigen Grundkörpers mit gegebenenfalls auch zwei in einer Silikonkautschukschicht eingelagerten Gewebelagen und deren Rollen zu einem hülsenförmigen Rohling kann ein überaus stabiler und auch temperaturfester Schlauch hergestellt werden. Weitere vorteilhafte Merkmale sind den Unteransprüchen zu entnehmen.

Anhand der Zeichnung wird die Erfindung nachstehend beispielhaft näher erläutert:
- Figur 1: zeigt schematisch eine Platte aus einem Silikonwerkstoff mit einer Druckträgerschicht aus einem Gewebe zum Wickeln auf einen Hilfsdorn;
- Figur 2: zeigt einen fertigen Rohling auf einem konturierten Dorn als schematische Darstellung mit endseitig auf den Rohling aufzusetzenden Muffen.

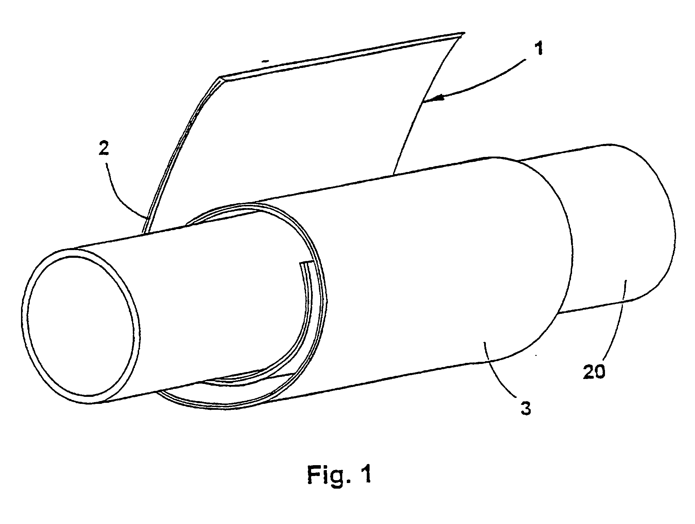

Gemäß Figur 1 stellt sich die Platte 1 aus Silikonkautschuk mit einer inneren Trägerschicht aus einem Gewebe 2 als partiell auf einem ersten Dorn, dem sogenannten Hilfsdorn 20, aufgerollter Rohling 3 dar. Hierbei ist erkennbar, dass die Platte mehrfach übereinander -ähnlich einer Spiralegewickelt ist, so dass mindestens zwei Trägerschichten aus Gewebe 2 übereinander verlaufen. Nachdem der Rohling auf dem Hilfsdorn 20 aufgewickelt ist, wird er vom Hilfdorn entdornt.

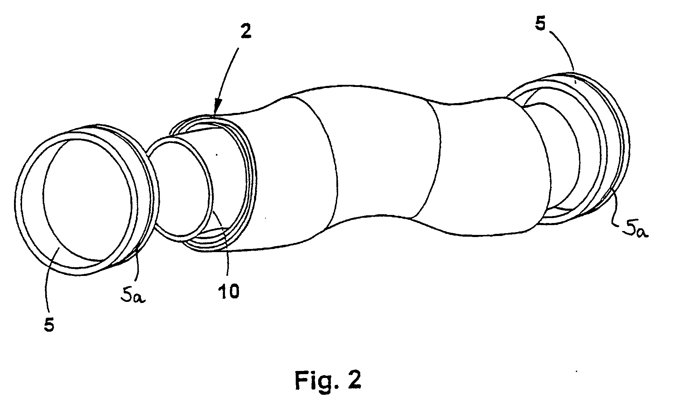

Vor der eigentlichen Vulkanisation wird der Rohling auf den entsprechend geformten zweiten Dorn 10 geschoben, wobei dann die Muffen 5 aus Silikongummi aufgeschoben werden, um dann im auf dem zweiten Dorn 10 aufgeschobenen Zustand bandagiert zu werden (Fig. 2). Die Muffen 5 zeigen eine nutartige umlaufende Einprägung 5a zur Aufnahme der Schlauchschelle im eingebauten Zustand eines derartigen Ladeluftschlauches im Motor. Bei der Bandagierung wird ein entsprechend festes und auch temperaturbeständiges Band über die vollständige Länge des Rohlings gewickelt, um bei der Vulkanisation eine innige Verbindung der gewickelten Lagen des Rohlings untereinander zu bewirken und zusätzlich natürlich auch eine innige Verbindung der Muffen 5 aus Silikongummi mit dem Schlauchrohling aus Silikonkautschuk. Durch die Bandagierung werden auch in dem Rohling vorhandene Luftblasen herausgepresst. Nach der Vulkanisation wird die Bandage abgenommen, und der Schlauchrohling ist fertig, wenn er von dem Dorn gezogen worden ist.

## Patentansprüche

1. Schlauch, z. B. ein Ladeluftschlauch, mit einem mindestens eine Gewebelage (2) umfassenden Druckträger, wobei der Druckträger von einem vulkanisierbaren Material umgeben ist, und wobei der Schlauch endseitig eine umlaufende Nut (5a) besitzt,
**dadurch gekennzeichnet,**
**dass** die Gewebelage (2) von einem silikonhaltigen Material beidseitig ummantelt ist, wobei der Schlauch (3) endseitig jeweils eine vorgeformte Muffe (5) aufweist, wobei die Muffe eine Prägung in Form der umlaufenden Nut (5a) aufweist.

2. Schlauch, insbesondere Ladeluftschlauch, nach Anspruch 1,
**dadurch gekennzeichnet,**
**dass** der Schlauch (3) wandungsinnenseitig eine hautähnliche Sperrschicht aufweist.

3. Schlauch, insbesondere Ladeluftschlauch, nach Anspruch 1,
**dadurch gekennzeichnet,**
**dass** die Sperrschicht aus Fluorkautschuk oder Fluorkunststoff besteht.

4. Schlauch, insbesondere Ladeluftschlauch, nach Anspruch 1,
**dadurch gekennzeichnet,**
**dass** die Gewebelage (2) durch Aramidfäden verstärkt ist.

5. Schlauch, insbesondere Ladeluftschlauch, nach Anspruch 1,
**dadurch gekennzeichnet,**
**dass** die Muffe (5) aus vernetztem Silikonkautschuk (Silikongummi) besteht.

6. Schlauch, insbesondere Ladeluftschlauch, nach Anspruch 1,
**dadurch gekennzeichnet,**
**dass** das silikonhaltige Material des Schlauchrohlings Silikonkautschuk ist.

7. Verfahren zur Herstellung eines Schlauches, insbesondere eines Ladeluftschlauches, mit einem plattenförmigen Grundkörper (1) mit einem Druckträger aus mindestens einer Gewebelage, wobei die Gewebelage beidseitig von einem silikonhaltigen Material (Silikonkautschuk) ummantelt ist, wobei der plattenförmige Grundkörper (1) zur Bildung eines Rohlings (3) auf einen ersten Dorn (20) gerollt wird,
**dadurch gekennzeichnet,**
**dass** der Rohling (3) von dem ersten Dorn (20) entdornt wird, dieser Rohling auf einen der Kontur des Schlauches entsprechenden zweiten Dorn (10) geschoben wird, endseitig auf den Rohling (3) jeweils eine vorgefertigte Muffe (5) aus einem Elastomermaterial, z. B. Silikongummi, aufgebracht wird, der Rohling (3) auf dem zweiten Dorn (10) bandagiert und daraufhin vulkanisiert wird.

8. Verfahren zur Herstellung eines Schlauches, insbesondere eines Ladeluftschlauches, nach Anspruch 7,
**dadurch gekennzeichnet,**
**dass** vor dem Rollen des plattenförmigen Grundkörpers auf den ersten Dorn (20), auf den Dorn (20) eine Schicht aus einem Fluorkautschuk aufgebracht wird.

9. Verfahren zur Herstellung eines Schlauches, insbesondere Ladeluftschlauch, nach Anspruch 7,
**dadurch gekennzeichnet,**
**dass** der Rohling (3) über seine gesamte Länge einschließlich der aufgesetzten Muffen (5) bandagiert wird.

10. Verfahren zur Herstellung eines Schlauches, insbesondere Ladeluftschlauch, nach Anspruch 7,
**dadurch gekennzeichnet,**
**dass** der Rohling (3) auf dem ersten Dorn (20) vorvulkanisiert wird.

## Claims

1. A hose, e.g., a charge air hose, with a pressure backing layer comprised of at least one fabric layer (2), said pressure backing layer being surrounded by a vulcanizable material and the hose having a circumferential groove (5a) at the end thereof,
**characterized in that**
the fabric layer (2) is coated on either side with a silicone-containing material, the hose (3) having a preformed bushing (5) on either end, said bushing being provided with an impression in the form of the circumferential groove (5a).

2. The hose, more specifically the charge air hose, according to claim 1,
**characterized in that**
the hose (3) has a skin-like barrier layer on the inner side of its inner wall.

3. The hose, more specifically the charge air hose, according to claim 1,
**characterized in that**
the barrier layer is made of fluorocaoutchouc or of a fluoroplastic material.

4. The hose, more specifically the charge air hose, according to claim 1,
**characterized in that**
the fabric layer (2) is reinforced with aramide fibers.

5. The hose, more specifically the charge air hose, according to claim 1,
**characterized in that**
the bushing (5) is comprised of cross-linked silicone caoutchouc (silicone rubber).

6. The hose, more specifically the charge air hose, according to claim 1,
**characterized in that**
the silicone-containing material of the hose blank is silicone caoutchouc.

7. A method of fabricating a hose, more specifically a charge air hose, with a plate-shaped base member (1) provided with a pressure backing layer consisting of at least one fabric layer, said fabric layer being coated on either side with a silicone-containing material, the plate-shaped base member (1) being wound around a first mandrel (20) for forming a blank (3),
**characterized in that**
the first mandrel (20) is removed from the blank (3), a second mandrel (10) conforming to the contour of the hose is introduced into said blank, a prefabricated bushing (5) made of an elastomer material such as silicone rubber is placed on the respective end of the blank (3), a tape is wrapped around the blank (3) having the second mandrel (10) therein and the blank is then vulcanized.

8. The method of fabricating a hose, more specifically a charge air hose, according to claim 7,
**characterized in that**
a layer of fluorocaoutchouc is applied to the first mandrel (20) prior to winding the plate-shaped base member around said mandrel (20).

9. The method of fabricating a hose, more specifically a charge air hose, according to claim 7,
**characterized in that**
a tape is wrapped around the blank (3) over the entire length thereof including the bushings (5) placed thereon.

10. The method of fabricating a hose, more specifically a charge air hose, according to claim 7,
**characterized in that**
the blank (3) is prevulcanized with the first mandrel (20) being disposed therein.

## Revendications

1. Tuyau flexible, p.ex. tuyau d'admission d'air de suralimentation, avec un substrat comportant au moins une couche de tissu (2), le substrat étant entouré d'un matériau vulcanisable et le tuyau possédant à son extrémité une rainure circulaire (5a),
**caractérisé en ce que**
la couche en tissu (2) est revêtue sur ses deux faces d'un matériau siliconé, le tuyau (3) comportant à chacune de ses extrémités un manchon (5) préfabriqué, ledit manchon comportant une empreinte sous forme de rainure circulaire (5a).

2. Tuyau flexible, notamment tuyau d'admission d'air de suralimentation, selon la revendication 1,
**caractérisé en ce que**
le tuyau (3) comporte sur la face interne de sa paroi une pellicule formant barrière.

3. Tuyau flexible, notamment tuyau d'admission d'air de suralimentation, selon la revendication 1,
**caractérisé en ce que**
la pellicule formant barrière est réalisée en caoutchouc ou en plastique fluorés.

4. Tuyau flexible, notamment tuyau d'admission d'air de suralimentation, selon la revendication 1,
**caractérisé en ce que**
la couche de tissu (2) est renforcée par des fils d'aramide.

5. Tuyau flexible, notamment tuyau d'admission d'air de suralimentation, selon la revendication 1,
**caractérisé en ce que**
le manchon (5) est réalisé en caoutchouc silicone réticulé (gomme silicone).

6. Tuyau flexible, notamment tuyau d'admission d'air de suralimentation, selon la revendication 1,
**caractérisé en ce que**
le matériau siliconé de la préforme du tuyau est du caoutchouc silicone.

7. Procédé de fabrication d'un tuyau flexible, notamment d'un tuyau d'admission d'air de suralimentation, avec un élément de base (1) en forme de plaque muni d'un substrat constitué d'au moins une couche en tissu, la couche en tissu étant revêtue sur ses deux faces d'un matériau siliconé (caoutchouc silicone), l'élément de base (1) en forme de plaque étant enroulé sur un premier mandrin (20) afin de former une préforme (3),
**caractérisé en ce qu'**
on retire la préforme (3) du premier mandrin (20), on enfile ladite préforme sur un deuxième mandrin (10) correspondant au contour du tuyau flexible, on enfile sur chaque extrémité de la préforme (3) un manchon (5) préfabriqué réalisé en élastomère, p. ex. en gomme silicone, on fixe la préforme (3) sur le deuxième mandrin (10) au moyen d'un bandage et on procède ensuite à la vulcanisation.

8. Procédé de fabrication d'un tuyau flexible, notamment d'un tuyau d'admission d'air de suralimentation, selon la revendication 7,
**caractérisé en ce qu'**
on applique sur le mandrin (20) une couche en caoutchouc fluoré avant d'enrouler l'élément de base en forme de plaque sur le premier mandrin (20).

9. Procédé de fabrication d'un tuyau flexible, notamment d'un tuyau d'admission d'air de suralimentation, selon la revendication 7,
**caractérisé en ce qu'**
on bande la préforme (3) sur toute sa longueur, y compris les manchons (5) qui y sont apposés.

10. Procédé de fabrication d'un tuyau flexible, notamment d'un tuyau d'admission d'air de suralimentation, selon la revendication 7,
**caractérisé en ce qu'**
on prévulcanise la préforme (3) sur le premier mandrin (20).
